# EUROPÄISCHE PATENTSCHRIFT

(11) **EP 2 163 701 B1**
(45) Veröffentlichungstag und Bekanntmachung des Hinweises auf die Patenterteilung: **29.04.2015**
(21) Anmeldenummer: 09169932.2
(22) Anmeldetag: 10.09.2009
(51) Int. Cl.: E04B 9/32, F21S 2/00, F21V 8/00, F21Y 101/02

(54) **System zur Aufhellung der Decke eines Raumes**
System for illuminating the ceiling of a room
Système d'éclaircissement du plafond d'une pièce

(30) Priorität: 12.09.2008 DE 102008047010
(43) Veröffentlichungstag der Anmeldung: 17.03.2010
(73) Patentinhaber: Zumtobel Lighting GmbH, 6850 Dornbirn (AT)
(72) Erfinder: Ladstätter, Gerald, 6833 klaus (AT)
(74) Vertreter: Thun, Clemens

(56) Entgegenhaltungen:
- WO-A1-03/062700
- WO-A1-2007/087710
- WO-A2-2008/052213
- DE-U1-202005 006 915
- US-A1- 2001 048 603
- US-A1- 2007 133 193
- US-A1- 2008 037 284

## Beschreibung

Die vorliegende Erfindung betrifft ein System, welches zur Aufhellung der Decke eines Raumes vorgesehen ist.

Zur Ausleuchtung größerer Räume werden überwiegende Leuchten oder Beleuchtungssysteme verwendet, mit deren Hilfe Licht in gerichteter Weise in bestimmte Bereiche abgestrahlt wird. Eine derartige gerichtete Lichtabgabe ist insbesondere in Räumen mit Arbeitsplätzen von Vorteil, da hierbei sichergestellt ist, dass in den gewünschten Bereichen eine ausreichende Helligkeit vorliegt. Ferner kann die Lichtabgabe derart erfolgen, dass Reflektionen an senkrecht stehenden Flächen, insbesondere Bildschirmoberflächen vermieden werden, wodurch die Arbeitsbedingungen für die einzelnen Personen deutlich verbessert werden. Hierzu kommen in der Regel sogenannte Rasterleuchten zum Einsatz, deren Reflektoren derart ausgelegt sind, dass das Licht lediglich in bestimmte Winkelbereiche abgestrahlt wird.

Der Einsatz derartiger Rasterleuchten führt dann allerdings oftmals zu dem sogenannten Höhleneffekt. Da die Rasterleuchten in der Regel derart ausgelegt sind, dass ein direkter Blick in die Lichtquelle unter bestimmten Winkelbereichen vermieden wird, hat dies zur Folge, dass der Raum selbst zwar durch die Leuchten ausreichend aufgehellt wird, die Decke allerdings dunkel erscheint. Dies führt zu einem unangenehmen Gesamteindruck, weshalb verschiedenste Vorkehrungen vorgeschlagen wurden, diesen Effekt zu vermeiden. Zwischenzeitlich wurden sogar entsprechende Vorschriften entwickelt, gemäß denen die Decke zumindest mit einem gewissen Lichtanteil aufgehellt werden muss.

Zum Aufhellen der Decken wurden in der Vergangenheit überwiegend Leuchten eingesetzt, die einen Indirekt-Lichtanteil abgeben. Es kann sich hierbei um abgependelte Leuchten, Stehleuchten oder Anbauleuchten handeln, die einen geringen Lichtanteil zur Oberseite hin abstrahlen. Auch die Verwendung von Einbauleuchten, welche großflächig diffuses Licht abgeben, ist bekannt. Diese Systeme leiden allerdings unter einer äußerst niedrigen Energieeffizienz. Da die Reflektion des indirekt abgegebenen Lichts an der Decke stark von der Beschaffenheit der Decke abhängt, besteht oftmals das Problem, dass nur ein sehr geringer Anteil des indirekten Lichts letztendlich an der gewünschten Arbeitsfläche ankommt. Um dementsprechend eine gewünschte Deckenaufhängung zu erzielen, ist bei derartigen Systemen ein äußerst hoher Energieaufwand erforderlich. Ein weiteres Problem liegt ferner darin, dass bei geringen Raumhöhen der Abstand der zur Indirekt-Beleuchtung verwendeten Leuchten oftmals verhältnismäßig gering ist, was zur Folge hat, dass sich direkt über oder an den Leuchten sogenannte Hotspots bilden, die Decke also hinsichtlich ihrer Helligkeit stark inhomogen erscheint.

Aus der US 2007/0133193 A1 ist eine abgehängte Decke mit Leuchtmodulen bekannt, die jeweils ein plattenförmiges Lichtabstrahlelement aufweisen. Dabei wird jeweils von einer Lichtquelle Licht seitlich in das Lichtabstrahlelement eingekoppelt.

Aus der WO 2007/087710 A1 ist ein Leuchtelement mit einem plattenförmigen Lichtabstrahlelement bekannt, das in seinem Inneren einen Hohlraum für eine Lichtquelle aufweist.

Deckensysteme mit flächigen Lichtabgabeelementen sind weiterhin aus dem Schriften US 2008/0037284 A1 und WO 2008/052213 A2 bekannt.

Der vorliegenden Erfindung liegt deshalb die Aufgabe zugrunde, eine neuartige Lösung anzugeben, mit deren Hilfe die vorstehend beschriebenen Probleme bei der Ausleuchtung eines Raums vermieden werden können.

Die Aufgabe wird durch ein System zur Deckenaufhellung, welches die Merkmale des Anspruchs 1 aufweist, gelöst. Vorteilhafte Weiterbildungen der Erfindung sind Gegenstand der abhängigen Ansprüche.

Erfindungsgemäß wird ein neuartiges System angegeben, welches den Eindruck einer leicht selbst-leuchtenden Decke generiert. Hierzu werden erfindungsgemäße Leuchtmodule eingesetzt, mit deren Hilfe in einfacher Weise und mit einem äußerst geringen Energieaufwand eine geringe Lichtmenge großflächig abgegeben wird. Der äußerst minimale Materialeinsatz, der hierbei erforderlich ist, wird dadurch erzielt, dass die Leuchtmodule jeweils ein plattenförmiges Lichtabstrahlelement sowie eine diesem Lichtabstrahlelement zugeordnete, im Wesentlichen punktförmige Lichtquelle aufweisen. Das Licht dieser Lichtquelle wird durch das Abstrahlelement flächig abgegeben.

Gemäß der vorliegenden Erfindung wird dementsprechend ein System zu Aufhellung der Decke eines Raumes vorgeschlagen, welches mehrere Leuchtmodule aufweist, wobei die Leuchtmodule jeweils ein plattenförmiges Lichtabstrahlelement sowie eine dem Lichtabstrahlelement zugeordnete, im Wesentlichen punktförmige Lichtquelle aufweisen, wobei das Licht der Lichtquellen an einer Seite in das Lichtabstrahlelement eingekoppelt und über eine Flachseite des Lichtabstrahlelements flächig abgestrahlt wird.

Vorzugsweise ist jedem Leuchtmodul genau eine einzige Lichtquelle zugeordnet, wobei es sich hierbei insbesondere um eine LED handeln kann. Die Lichtquellen mehrerer Leuchtmodule können dabei gemeinsam eine Kette bilden und mit einem Versorgungsgerät verbunden sein.

Erfindungsgemäß sind die Lichtabstrahlelemente als Lichtleiter ausgebildet, wobei die zugehörige Lichtquelle jeweils im Zentrum des Lichtleiters angeordnet ist, und zwar jeweils in einer zylinderförmigen Durchgangsöffnung des Lichtleiters. Die Lichtabstrahlelemente sind jeweils durch eine massive Lichtleitplatte gebildet. Jeweils an einer Unterseite der Lichtquelle ist ein domförmiger Reflektor angeordnet.

Vorzugsweise sind die Lichtabstrahlelemente an denjenigen Seitenflächen, über die keine Lichteinkopplung oder Lichtabgabe erfolgt, mit einer reflektierenden Beschichtung versehen. Die Leuchtmodule sind dabei insbesondere derart ausgebildet, dass sie jeweils als abgehängte Deckenmodule an der Decke eines Raums befestigt werden können.

Mit Hilfe des erfindungsgemäßen Systems kann nunmehr eine effiziente und gezielte Aufhellung der Decke erzielt werden. Dabei eröffnet die besondere Ausgestaltung der Leuchtmodule erstmalig auch die Möglichkeit, LEDs großflächig für eine Deckenaufhellung einzusetzen. Bislang war dies nur mit Hilfe einer großen Anzahl von LEDs möglich. Beim Einsatz derartiger Lichtquellen bestünde dann auch die Möglichkeit, die Lichtfarbe zu verändern bzw. die Farbtemperatur der Deckenaufhellung zu beeinflussen. Da ferner nunmehr auch eine örtliche Trennung zwischen Direkt-Licht und Indirekt-Licht vorliegt, besteht die Möglichkeit einer örtlich gezielten Aufhellung. Dementsprechend kann die gesamte Ausleuchtung des Raumes in optimalerweise an die entsprechenden Verhältnisse oder Bedürfnisse angepasst werden.

Nachfolgend soll die Erfindung anhand der beiliegenden Zeichnung näher erläutert werden. Es zeigen:
- Figur 1: schematisch die Unterseite eines erfindungsgemäßen Systems zur Deckenaufhellung;
- Figur 2: ein erstes Ausführungsbeispiel eines erfindungsgemäßen Leuchtmoduls in Schnittdarstellung;
- Figur 3: ein zweites Ausführungsbeispiel eines Leuchtmoduls;
- Figur 4: ein drittes Ausführungsbeispiel eines Leuchtmoduls;
- Figur 5: mögliche Varianten zur Anordnung der erfindungsgemäßen Leuchtmodule bei dem System zur Deckenaufhellung.

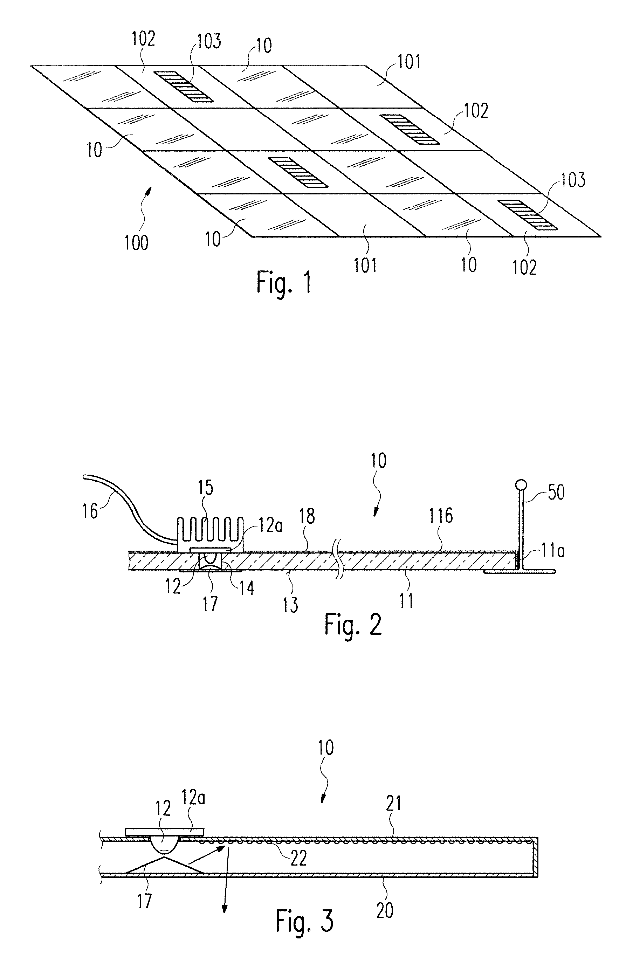

Anhand von Figur 1 sollen zunächst grundsätzlich der Aufbau und die Funktionsweise des erfindungsgemäßen Systems erläutert werden. Gezeigt ist der Ausschnitt einer Decke 100 eines zu beleuchtenden Raumes, wobei es sich hierbei um eine abgehängte Decke handelt, welche aus mehreren Einzel-Modulen gebildet ist. Das Bezugszeichen 101 bezeichnet hierbei klassische abgehängte Deckenmodule, die beispielsweise aus Gipskarton bestehen und eine weiße Deckenfläche bilden. Diese Deckenmodule 101 werden in ein Halterungs-System gehängt, sodass sie in einem gewissen Abstand unterhalb der eigentlichen Raumdecke angeordnet sind. Der hierdurch gebildete Freiraum zwischen abgehängter Decke und Raumdecke kann dann zum Verlegen von Leitungen für die Stromversorgung, zur Telekommunikation oder von Einrichtungen zur Beeinflussung des Raumklimas genutzt werden.

Mit dem Bezugszeichen 102 wiederum sind Module versehen, welche eine Rasterleuchte beinhalten. Auch diese Leuchtenmodule werden in das System zur Abhängung der Raumdecke eingehängt und sind dementsprechend mit ihrer Unterseite im Wesentlichen bündig mit den herkömmlichen Deckenmodulen 101 ausgerichtet. An der Oberseite dieser Module 102 sind dann Lichtquellen sowie Mittel zur Stromversorgung und zum Betreiben dieser Lichtquellen angeordnet, wobei die Lichtabgabe zu Unterseite hin mit Hilfe von Leuchtenrastern 103 erfolgt. Diese an sich bekannten Leuchten weisen üblicherweise zwei längliche Seitenreflektoren auf, welche durch eine Vielzahl von quer hierzu angeordneten Lamellen verbunden sind. Die Seitenreflektoren und Querlamellen sind hierbei reflektierend ausgebildet und derart geformt bzw. ausgerichtet, dass das zur Unterseite hin abgegebene Licht lediglich in bestimmten Winkelbereichen abgestrahlt wird. Mit Hilfe dieser gerichteten Lichtabgabe können Arbeitsbereiche gezielt ausgeleuchtet werden. Gleichzeitig verhindern die Leuchtenraster 103, dass ein Beobachter unter bestimmten Winkelbereichen einen direkten Blick auf die Lichtquelle erhält und dementsprechend geblendet wird.

Diese Rasterleuchten 102 bewirken dementsprechend eine effiziente Ausleuchtung der Arbeitsplätze eines Raums und verhindern gleichzeitig Blendungen, auf der anderen Seite haben sie zur Folge, dass die Decke dunkel erscheint, obwohl der Raum selbst erhellt ist. Um diesen unangenehmen sog. Höhleneffekt zu vermeiden werden deshalb nunmehr erfindungsgemäß zusätzliche Module eingesetzt, welche in Figur 1 mit dem Bczugszcichcn 10 versehen sind und das Grundgerüst des erfindungsgemäßen Systems zur Deckenaufhellung darstellen.

Diese Leuchtmodule 10 weisen vorzugsweise die gleichen Abmessungen wie die weiteren Module 101 und 102 des Deckensystems auf und können ferner in gleicher Weise an den Einrichtungen zur Abhängung der Decke montiert werden. Die Besonderheit dieser Leuchtmodule 10 besteht nun mehr allerdings darin, dass diese über ihre Fläche hinweg eine geringe Menge an Licht abgeben, was zur Folge hat, dass die Decke 100 selbst in diesen Bereichen hell erscheint. Im dargestellten Ausführungsbeispiel von Figur 1 sind hierbei die Leuchtenmodule 10 in parallel zueinander verlaufenden Reihen zwischen den Modulen 102 mit den Rasterleuchten angeordnet, wie später aber noch erläutert wird, besteht die Möglichkeit der freien Anordnung der Leuchtmodule 10.

Eine Besonderheit der Leuchtmodule 10 besteht darin, dass die flächige Aufhellung der Decke mit äußerst geringer Energie sowie einem sehr geringem Materialaufwand erzielt wird. Dies wird durch den besonderen Aufbau der Leuchtmodule 10 erzielt, der nachfolgend anhand von drei verschiedenen Ausführungsbeispielen erläutert werden soll.

Figur 2 zeigt hierbei zunächst ein erstes Ausführungsbeispiel eines erfindungsgemäßen Leuchtmoduls 10, welches zunächst ein plattenförmiges Lichtabstrahlelement 11 sowie eine dem Abstrahlelement 11 zugeordnete punktförmige Lichtquelle 12 aufweist. Wie in Figur 2 schematisch dargestellt ist, kann dieses Leuchtmodul 10 in einfacher Weise in die Halterungselemente 50 des abgehängten Deckensystems eingehängt werden. Die Lichtabgabe erfolgt flächig über die untere Flachseite 13 des Lichtabstrahlelements 11. Dieser grundsätzliche Aufbau ist sämtlichen Varianten des erfindungsgemäßen Leuchtmoduls 10 gemeinsam. Die verschiedenen Ausführungsbeispiele unterscheiden sich in erster Linie hinsichtlich der Anordnung der Lichtquelle 12 sowie der Art der Einkopplung des Lichts in das Lichtabstrahlelement 11.

So ist bei dem ersten Ausführungsbeispiel gemäß Figur 2 das Lichtabstrahlelement 11 durch eine massive, insbesondere eine quadratische Lichtleitplatte gebildet. Derartige Platten sind bereits grundsätzlich bekannt. Sie sind derart ausgestaltet, dass das an einer Flachseite eingekoppelte Licht derart innerhalb der Platte mittels Reflektionen weiter transportiert und verteilt wird, das letztendlich über die gesamte Flachseite 13 möglichst gleichmäßig eine Lichtabgabe erfolgt. Die in Figur 2 verwendete Lichtleitplatte 13 besteht aus einem transparenten Material, beispielsweise PMMA, und ist an ihrer Rückseite mit Strukturen versehen, welche auftreffende Lichtstrahlen derart ablenken, dass diese die Platte 11 über die Lichtabstrahlfläche 13 verlassen können. Diese Strukturen könnten beispielsweise mittels Laserbearbeitung in die Oberfläche angebracht werden. Allerdings sind aus dem Stand der Technik auch alternative Lösungen bekannt, die genutzt werden können, um eine gleichmäßige Lichtabgabe zu erzielen.

Die Lichteinkopplung erfolgt bei dem Ausführungsbeispiel in Figur 2 nunmehr dadurch, dass die Platte 11 im Zentrum eine Ausnehmung 14 aufweist, innerhalb der die Lichtquelle 12, bei der es sich vorzugsweise um eine LED handelt, angeordnet ist. Über die Seitenwand dieser vorzugsweise zylinderförmigen Ausnehmung 14 wird dann das LED-Licht in die Platte 11 eingekoppelt und wie zuvor beschrieben derart über sämtliche Bereiche verteilt, dass eine möglichst gleichmäßige Abgabe über die Abstrahlfläche 13 erfolgt. Im dargestellten Ausführungsbeispiel ist ferner an der Unterseite der Lichtquelle 12 noch ein domförmiger Reflektor 17 angeordnet, der die seitliche Lichtabgabe durch die LED 12 und damit die gleichmäßige Einkopplung in das Lichtabstrahlelement 11 verbessern soll.

Eine Platine 12a, auf der die LED 12 angeordnet ist, ist dabei an der Rückseite der Lichtleitplatte angeordnet. Ferner ist diese Platine 12a mit einem Kühlelement 15 gekoppelt, um die beim Betrieb der Lichtquelle 12 auftretende Wärme möglichst effizient abzuführen. Die Stromversorgung der Lichtquelle 12 erfolgt über Stromversorgungsleitungen 16, welche - wie nachfolgend noch beschrieben - mehrere Lichtquellen benachbarter Leuchtmodule 10 zu einer Kette verbinden.

Die Lichtabstrahlelemente 11 sind wie bereits erwähnt vorzugsweise aus einem transparenten Material ausgebildet. Um allerdings das Licht der einzelnen Lichtquelle 12 effizient nutzen zu können, sind die Lichtabstrahlelemente 11 vorzugsweise an denjenigen Seiten, über die keine Lichtabgabe erfolgt, mit einer reflektierenden Beschichtung versehen. Beim dargestellten Ausführungsbeispiel sind also die Schmalseiten 11 a sowie die der Lichtabstrahlseite 13 gegenüberliegende Flachseite 11b reflektierend ausgebildet. Vorzugsweise wird hierbei eine Beschichtung eingesetzt, welche zur Folge hat, dass das Leuchtmodul 10 sich hinsichtlich seines Gesamteindrucks nur unwesentlich von den klassischen abgehängten weißen Deckenmodulen 101 unterscheidet.

Das dargestellte Ausführungsbeispiel des Leuchtmoduls 10 zeichnet sich dadurch aus, dass mit einem verhältnismäßig geringem Material- und Energieaufwand eine flächige Lichtabgabe erzielt werden kann. Für die gewünschte Aufhellung der Decke ist eine Lichtleistung der LED von etwa 5 Watt vollkommen ausreichend, wenn die Deckenmodule - wie üblich - eine Größe von etwa 600 x 600 mm bzw. 625x 625 mm aufweisen.

Ein zweites Ausführungsbeispiel eines Leuchtmoduls 10 ist in Figur 3 dargestellt, wobei gleiche Elemente wiederum mit den gleichen Bezugszeichen versehen sind. Wiederum weist das Leuchtmodul 10 ein Lichtabstrahlelement 11 sowie eine zugehörige punktförmige Lichtquelle 12 in Form einer LED auf. Im Gegensatz zu dem Ausführungsbeispiel von Figur 2 ist nunmehr allerdings das Lichtabstrahlelement als flacher Hohlkörper ausgestaltet. Mit Hilfe eines domförmigen Reflektors 17 wird eine über den gesamten Umfang der LED 12 hinweg gleichmäßige Lichtabgabe erzielt. Das Licht wird dann in dem Hohllichtleiter entsprechend weitergeleitet und wiederum über die an der Unterseite angeordnete flache Lichtabstrahlplatte 20 abgegeben. Die gegenüberliegende Seite des Hohllichtleiters ist nunmehr durch eine reflektierende Fläche 21 gebildet, auf der einzelne Vorsprünge 22 ausgebildet sind, durch die auftreffende Lichtstrahlen derart abgelenkt werden, dass sie das Lichtabstrahlelement 11 verlassen können. Die Reflektionsfläche 21 kann wiederum - wie bei dem ersten Ausführungsbeispiel - ebenso wie die Stirnflächen des Hohllichtleiters mit einer Beschichtung versehen sein.

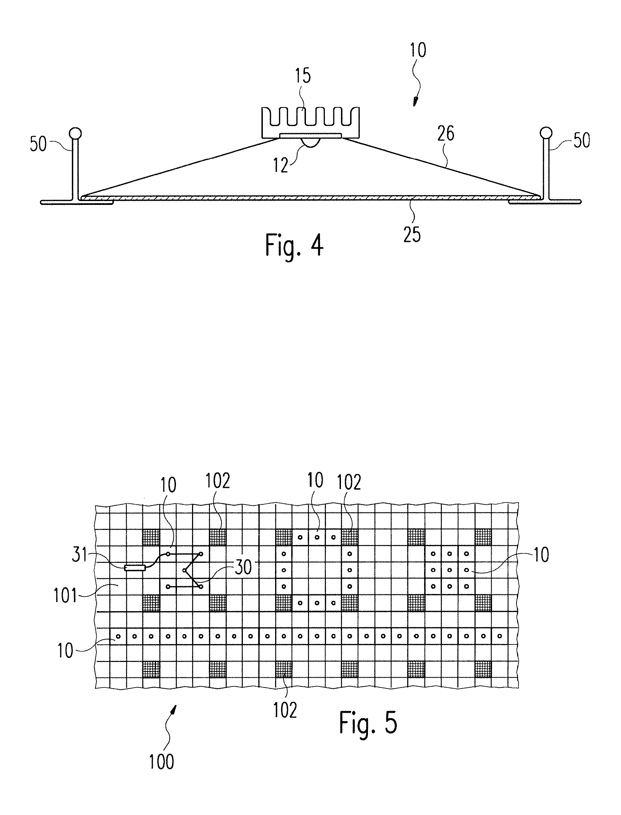

Figur 4 zeigt schließlich ein drittes Ausführungsbeispiel eines Leuchtmoduls 10, wobei nunmehr das Lichtabstrahlelement zur Lichtabgabe eine dünne transparente Scheibe 25 aufweist, an deren Rückseite und beabstandet hierzu die Lichtquelle 12 angeordnet ist. Von dieser Lichtquelle 12 erstreckt sich ein Reflektor 26 bis zu der Lichtabstrahlplatte 25, wobei dieser Reflektor 26 insbesondere diffus streuend ausgebildet ist, so dass das Licht der LED 12 möglichst gleichmäßig über die Lichtabstrahlplatte 25 abgegeben wird. Auch in diesem Fall kann also mit einem sehr geringen Material- und Energieaufwand eine flächige Lichtabgabe erzielt werden.

Die Leuchtenmodule 10 werden dann in das abgehängte Deckensystem eingesetzt, wobei entsprechend der Darstellung von Figur 5 die Anordnung frei gewählt werden kann. Die Darstellung zeigt die Unterseite einer Decke 100 eines Raums, welche einerseits klassische abgehängte Deckemodule 101 sowie Module 102 mit Rasterleuchten aufweist. In dieses System können nunmehr die erfindungsgemäßen Leuchtmodule 10 integriert werden, wobei auf Grund der Möglichkeit, ein klassisches Deckenmodul 101 in einfacher Weise durch ein Leuchtmodul 10 auszutauschen, verschiedenste Möglichkeiten zur Anordnung der Leuchtmodule 10 bestehen. Wie ferner in Figur 5 auf der linken Seite schematisch dargestellt ist, können dann die Lichtquellen 12 der einzelnen Leuchtmodule 10 über die Stromversorgungsleitungen zu einer Kette 30 verbunden sein, sodass jeweils mehrere Lichtquellen gemeinsam von einem Versorgungsgerät 31 mit Energie versorgt werden.

Durch die obigen Schilderungen wird deutlich, dass das erfindungsgemäße System zur Deckenaufhellung sehr einfach ausgestaltet ist und ohne großen Aufwand in herkömmliche abgehängte Decken integriert werden kann. Trotz eines geringen Energieaufwands wird hierbei der Effekt einer großflächigen, gleichmäßigen Deckenaufhellung erzielt, so dass die Anforderungen zur Ausleuchtung eines Raums ohne Weiteres eingehalten werden können. Hierdurch werden letztendlich die Möglichkeiten zur Gestaltung der Beleuchtung des Raums insgesamt erhöht.

## Patentansprüche

1. System zur Aufhellung der Decke (100) eines Raumes mit mehreren Leuchtmodulen (10), die jeweils ein plattenförmiges Lichtabstrahlelement (11) sowie eine dem Lichtabstrahlelement (11) zugeordnete, im Wesentlichen punktförmige Lichtquelle (12) aufweisen,
wobei das Licht der Lichtquelle (12) an einer Seite in das Lichtabstrahlelement (11) eingekoppelt und über eine Flachseite des Lichtabstrahlelements (11) flächig abgestrahlt wird,
wobei die Lichtabstrahlelemente (11) als Lichtleiter ausgebildet sind und die zugehörige Lichtquelle (12) jeweils im Zentrum des Lichtleiters angeordnet ist und wobei die Lichtabstrahlelemente (11) jeweils durch eine massive Lichtleitplatte gebildet sind,
**dadurch gekennzeichnet,**
**dass** die zugehörige Lichtquelle (12) jeweils in einer zylinderförmigen Durchgangsöffnung (14) des Lichtleiters angeordnet ist und
**dass** jeweils an einer Unterseite der Lichtquelle (12) ein domförmiger Reflektor (17) angeordnet ist.

2. System nach Anspruch 1,
**dadurch gekennzeichnet,**
**dass** die Leuchtmodule (10) jeweils eine einzelne im Wesentlichen punktförmige Lichtquelle (12) aufweisen.

3. System nach Anspruch 1 oder 2,
**dadurch gekennzeichnet,**
**dass** die Lichtquellen (12) der Leuchtmodule (10) jeweils durch eine LED gebildet sind.

4. System nach einem der vorherigen Ansprüche,
**dadurch gekennzeichnet,**
**dass** die Lichtquellen (12) mehrerer Leuchtmodule (10) gemeinsam mit einem Versorgungsgerät verbunden sind.

5. System nach einem der vorherigen Ansprüche,
**dadurch gekennzeichnet,**
**dass** die Lichtabstrahlelemente (11) an denjenigen Seitenflächen, über die keine Lichteinkopplung oder Lichtabgabe erfolgt, mit einer reflektierenden Beschichtung versehen sind.

6. System nach einem der vorherigen Ansprüche,
**dadurch gekennzeichnet,**
**dass** die Leuchtmodule (10) dazu ausgebildet sind, jeweils als abgedeckte Deckenmodule an der Decke eines Raums befestigt zu werden.

## Claims

1. A system for illumination of the ceiling (100) of a room with multiple lighting modules (10) each having a plate-like light emitting element (11) as well as comprising from the light-emitting element (11) an associated, substantially point-shaped light source (12) whereby the light from the light source (12) on one side in the light emitting element (11) and coupled via a flat side of the light emitting element (11) is extensively radiated, whereby the light emitting elements (11) are formed as a light guide and associated light source (12) arranged in each case in the centre of the light guide and whereby the light emitting elements are formed (11) each by a solid light guide plate
**characterised by the fact**
that the associated light source (12) is arranged each in a cylindrical shaped passage opening (14) of the light guide and
that in each case on a underside of the light source (12) a dome-shaped reflector (17) is arranged.

2. The system according to claim 1,
**characterised by the fact**
that the luminous modules (10) each having a single substantially point shaped light source (12).

3. The system of claim 1 or 2,
**characterised by the fact**
that the light sources (12) of the luminous modules (10) are each formed by a LED.

4. System according to one of the preceding claims,
**characterised by the fact**
that the light sources (12) of several luminous modules (10) are connected together to a supply unit.

5. System according to one of the preceding claims,
**characterised by the fact**
that the light emitting elements (11) of those lateral surfaces for which no light coupling or light emission occurs are provided with a reflective coating.

6. System according to one of the preceding claims,
**characterised by the fact**
that the luminous modules (10) are adapted each covered as ceiling modules to be fixed to the ceiling of a room.

## Revendications

1. Système pour l'éclairage du plafond (100) d'une pièce avec plusieurs modules d'éclairage (10) ayant chacun un émetteur de lumière en forme de plaque (11) et un élément d'émission de lumière (11) associé formant sensiblement un point (12)
dans lequel la lumière provenant de la source de lumière (12) d'un côté de l'élément émetteur de lumière (11) et couplé par un côté plat de l'élément émetteur de lumière (11)
dans lequel lesdits éléments émetteurs de lumière (11) qui sont formés comme un guide de lumière et une source de lumière associée (12) sont disposés dans chaque cas au centre du guide de lumière et dans lequel les éléments émetteurs de lumière (11) sont formées par une plaque de lumière solide de guidage,
**caractérisé par ce**
que la source de lumière associée (12) a une forme cylindrique d'ouverture de passage (14) autour du guide de lumière et
qu'un réflecteur en forme de dôme (17) est disposé dans chaque cas sur un côté inférieur de la source de lumière (12).

2. Système selon la revendication 1,
**caractérisé en ce**
**que** les modules lumineux (10) ont chacun un point sensible comportant une source lumineuse (12).

3. Système selon la revendication 1 ou 2,
**caractérisé en ce**
**que** les sources lumineuses (12) des modules d'éclairage (10) sont formées par une diode électroluminescente chacune.

4. Système selon l'une des revendications précédentes,
**caractérisé en ce**
**que** les sources de lumière (12) de plusieurs modules lumineux (10) sont connectées avec une unité d'alimentation.

5. Système selon l'une des revendications précédentes,
**caractérisé en ce**
**que** les éléments émetteurs de lumière (11) dont les faces ne comportent pas de couplage de la lumière ou d'émission de lumière ont un revêtement réfléchissant.

6. Système selon l'une des revendications précédentes,
**caractérisé en ce**
**que** les modules lumineux (10) sont adaptés pour que chaque module de plafond puisse être fixé au plafond d'une pièce.
